# EUROPEAN PATENT SPECIFICATION

(11) **EP 2 090 459 B1**
(45) Date of publication and mention of the grant of the patent: **20.06.2012**
(21) Application number: 09152747.3
(22) Date of filing: 13.02.2009
(51) Int. Cl.: B60N 2/36, B60N 2/015, B60N 2/30

(54) **Vehicle seat structure**
Fahrzeugsitzstruktur
Structure de siège de véhicule

(30) Priority: 15.02.2008 JP 2008034695
(43) Date of publication of application: 19.08.2009
(73) Proprietor: Toyota Boshoku Corporation, Kariya-shi, Aichi 448-8651 (JP)
(72) Inventor: Nagase, Takuya, Ikeda-shi Osaka 563-8651 (JP); Kakumu, Michinori, Toyota-shi Aichi 471-8571 (JP); Okugawa, Akiyoshi, Kariya-shi Aichi 448-8651 (JP); Asahina, Kazuya, Kariya-shi Aichi 448-8651 (JP)
(74) Representative: Winter, Brandl, Fürniss, Hübner, Röss, Kaiser, Polte - Partnerschaft

(56) References cited:
- DE-A1- 19 647 271
- US-A- 4 978 158
- US-A1- 2003 025 373
- US-B1- 6 209 943

## Description

### Technical Field of the Invention

The present invention relates to a vehicle seat structure including engagement lock members which are provided on one of a floor or a lower portion of a seat cushion at right and left positions thereof and which are respectively engageable to lock strikers provided on the other of the floor and the lower portion of the seat cushion at right and left positions thereof, wherein the engagement lock members are disengaged from the lock strikers by unlocking operation to the engagement lock members, so that the seat cushion becomes removable from the floor.

### Background of the Invention

The above vehicle seat structure is configured such that the seat cushion can be freely removed from the floor of the vehicle. Therefore, the space of the removed seat cushion is effectively utilized, whereby a wider walk-in space for vehicle passengers. a wider space for accommodating luggage, and the like, can be assured.

For instance, JP-UM-Hei.2-45839 or US 4,978,158 shows a related-art configuration for removing such seat cushion. In the related-art configuration, engagement lock members are provided on a lower portion of a seat cushion at right and left positions, and by gripping and rotating an unlock lever which links the engagement lock members, unlocking operation of the engagement lock members can be performed.

However, the unlock lever of the vehicle seat structure described in JP-UM-Hei.2-45839 or US 4,978,158 could fail to evenly unlock the right and left lock members for reasons of manufacturing error, deformation, and the like. Moreover, the unlock lever is made of a highly-rigid member, such as metal, and weighty. The lever has room for improvement in operability.

### Summary of the Invention

Starting out from the above discussed related-art contiguration, the present invention aims to making it easy to evenly release right and left engagement lock members on a seat cushion from a locked state and improve operability of unlocking operation.

This object is solved, according to claim 1, by a vehicle seat structure comprising engagement lock members which are provided on one of a floor and a lower portion of a seat cushion at right and left positions thereof and which are respectively engageable to lock strikers provided on the other of the floor and the lower portion of the seat cushion at right and left positions, wherein the engagement lock members are disengaged from the lock strikers by unlocking operation to the engagement lock members so that the seat cushion becomes removable from the floor, wherein a flexible member links the engagement lock members, and the unlocking operation of the engagement lock members is performed thorough the flexible member.

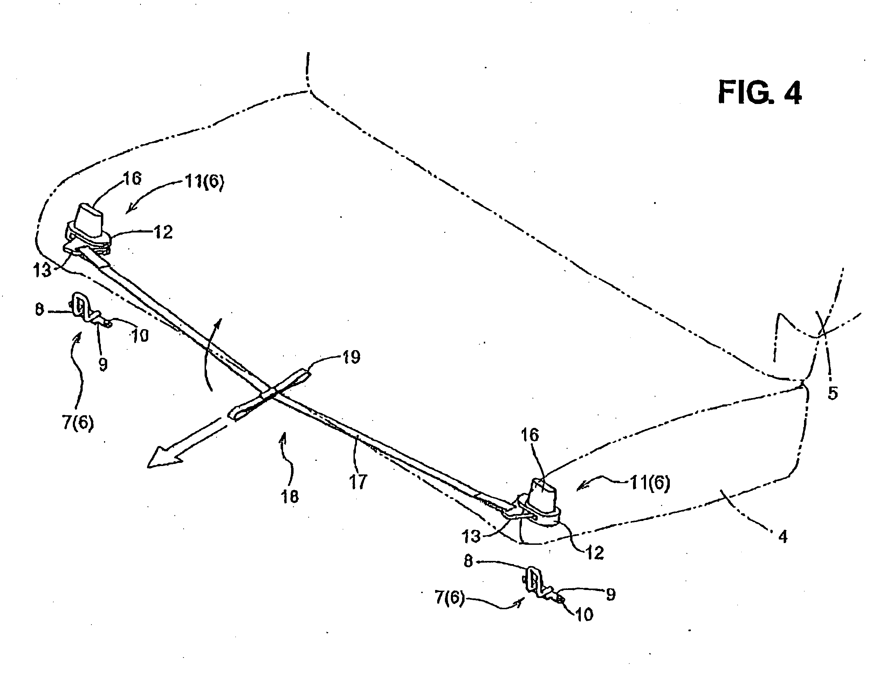

According to the above configuration, the unlocking operation is performed through the flexible member. Accordingly, even tensile force can be imparted to both engagement lock members. Consequently, as shown in Fig. 4, unlocking action that is even in the right-left direction can be performed. Further, as a result of adoption of the flexible member, the lock mechanism can be reduced in weight as compared with a related-art unlocking lever, so that operability can also be improved.

Preferred embodiments of the above configuration are subject-matter of dependent claims.

### Brief Description of the Drawings

In the accompanying drawings:
Fig. 1 is a side view of a front seat and a rear seat arranged in an interior of a vehicle according to an embodiment of the present invention;
Figs. 2A and 2B are perspective views showing that a passenger seated in the front seat shifts the rear seat to an upright position;
Fig. 3 is a perspective view showing an example of a lock mechanism. applicable to the vehicle according to the embodiment of the present invention;
Fig. 4 is a perspective view showing the example of the lock mechanism applicable to the vehicle according to the embodiment of the present invention;
Fig. 5 is a perspective view showing the example of the lock mechanism applicable to the vehicle according to the embodiment of the present invention;
Figs. 6A and 6B are transverse cross sections of the lock mechanism;
Fig. 7 is a longitudinal cross section of a handgrip provided on a string-shaped member; and
Fig. 8 is a perspective view of the handgrip provided on the string-shaped member.

### Detailed Description of the Embodiment

Embodiments of the present invention will be described hereunder by reference to the drawings.

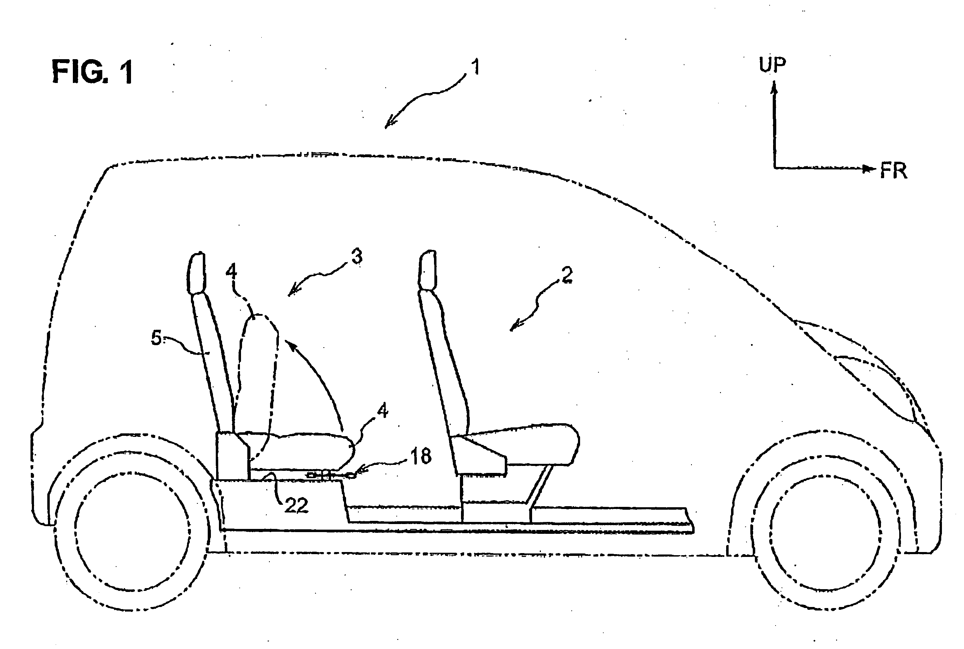

An embodiment of a vehicle 1 according to the present invention will be described with reference to Figs. 1 through 8.

An arrow FR, an arrow UP, and an arrow W provided in the drawings as required respectively designate a forward direction (a traveling direction), an upward direction, and a widthwise direction (a right-left direction) of the vehicle 1; and respectively correspond to a forward direction, an upward direction, and a widthwise direction of a front seat 2 and a rear seat 3, which will be described later.

(Configuration of the vehicle 1)

Fig. 1 shows, as a side view, a front seat 2 and a rear seat 3 provided in the interior of the vehicle 1. An arrow shown in Fig. 1 denotes a direction in which a seat cushion 4 of the rear seat 3 is brought up.

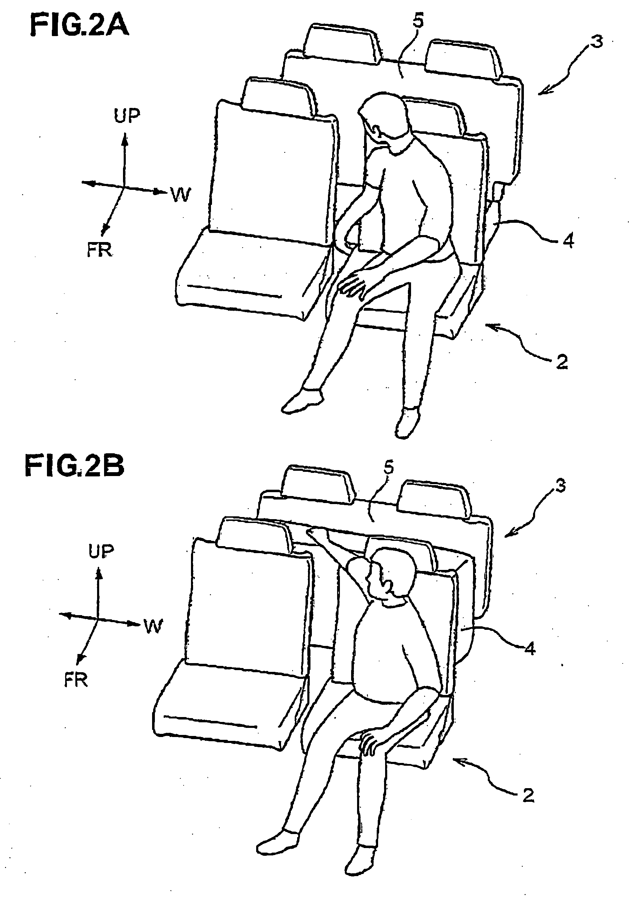

Figs. 2A and 2B show, as a perspective view, how a passenger who sits in the front seat 2 shifts the rear seat 3 to an upright position. Fig. 2A, shows that the seat cushion 4 of the rear seat 3 is forwardly tipped, and Fig. 2B shows that the seat cushion 4 is in an upright position.

As shown in Figs. 1, 2A and 2B, the vehicle 1 is equipped with the front seat 2 and the rear seat 3 that are provided in the interior of the vehicle. The front seat 2 serves as a driver's seat or a passenger seat, and the rear seat 3 is a so-called tip-up seat configured such that the seat cushion 4 of the rear seat is freely shiftable between the upright position and the forwardly-tipped position.

The seat cushion 4 of the rear seat 3 is arranged be rotatable around its rear end. Specifically, as shown in Fig. 1 with a solid line or Fig. 2A, a front portion of the seat cushion 4 in the forwardly-tipped position is locked by a lock mechanism provided on a lower portion of the seat cushion 4, so that passengers can sit in the rear seat 3.

As shown in Fig. 1 with a dashed line or Fig. 2B, by unlocking the lock of the lock mechanism that can fix the seat cushion 4 in the forwardly-tipped position, the front portion of the seat cushion 4 is removed from a floor 22 of the vehicle 1 in a jumping manner and further turned toward a rear seat back 5 into the upright position. In this state, the space occupied by the seat cushion 4 in the forwardly-tipped position can be utilized as a walk-in space for passengers, a space for accommodating luggage, and the like.

(Configuration of a lock mechanism 6)

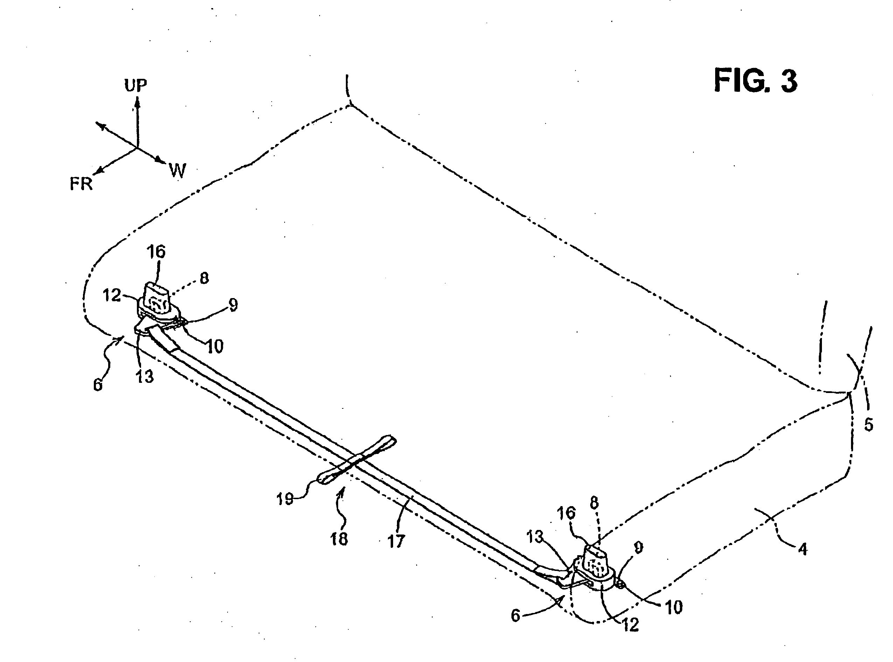

Figs. 3 through 5 show, as perspective views, an example of the lock mechanism 6 applicable to the vehicle according to the embodiment of the present invention.

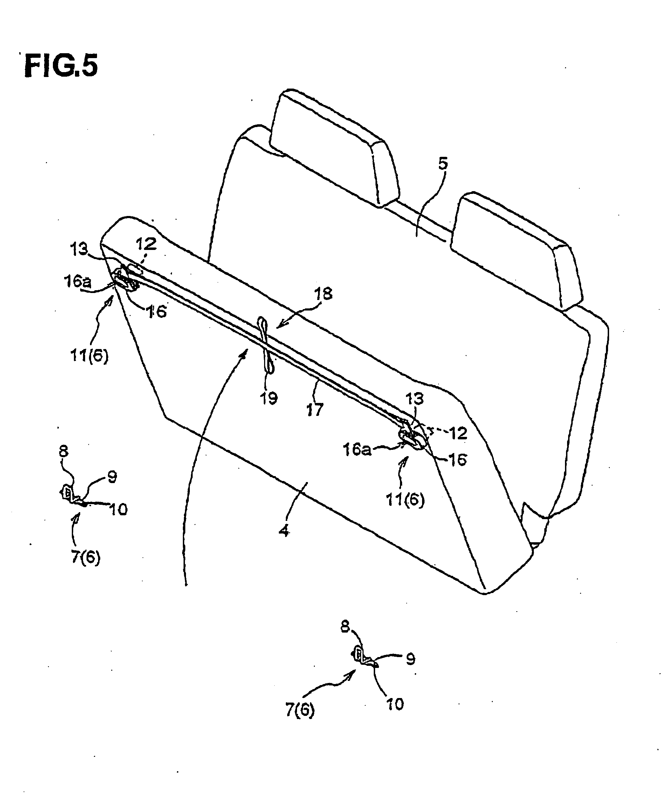

Fig. 3 shows that the lock mechanism 6 is in a locked state; Fig. 4 shows how the lock mechanism 6 is released from the locked state (an arrow in Fig. 4 denotes a direction in which the seat cushion 4 of the rear seat 3 is brought up, and an outlined arrow denotes a direction in which a handgrip 18 is to be pulled); and Fig. 5 shows how the front portion of the seat cushion 4 of the rear seat 3 is brought up to the upright position (an arrow in Fig. 5 denotes a direction in which the seat cushion 4 of the rear seat 3 is to be brought up).

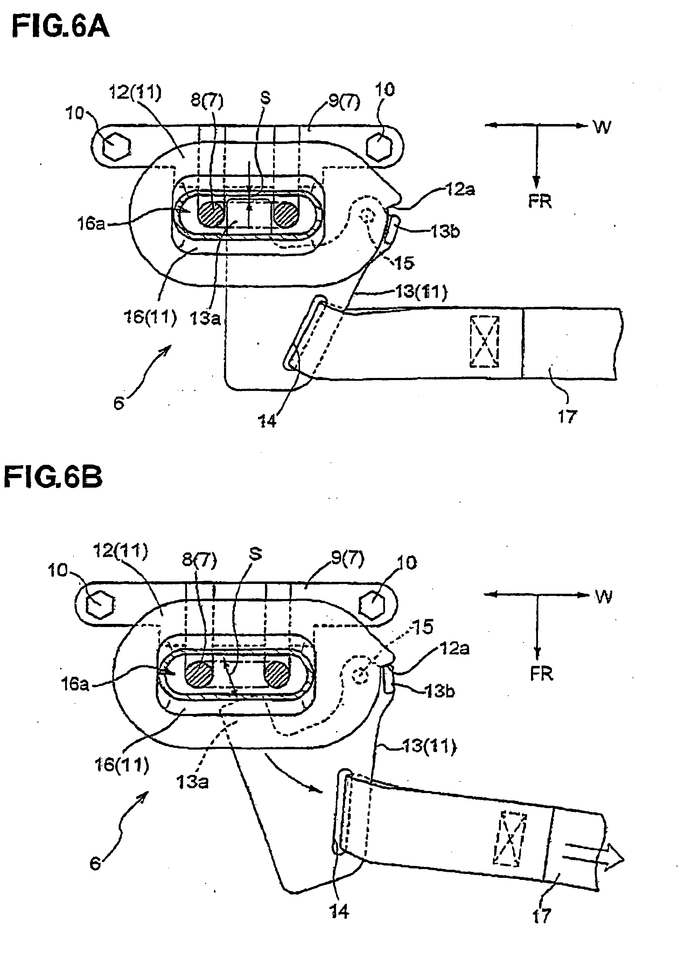

Figs. 6A and 6B show the lock mechanism 6 as a transverse section. Fig. 6A shows a locked state in which a base 12 and a hook 13 of an engagement lock member are engaged with a lock 8 of a lock striker. Fig. 6B shows an unlocked state in which the base 12 and the hook 13 are disengaged from the lock 8, and the engagement lock member is separatable from the lock striker. An arrow of solid line in Fig. 6B shows a rotating direction of the hook 13, and an outlined arrow shows a direction in which a string-shaped member 17 is to be pulled.

As shown in Figs. 3 through 5, the lock mechanism 6 has a pair of engagement lock members 11 provided on the seat cushion 4 of the rear seat 3 and a pair of lock strikers 7 provided on the floor 22 of the vehicle 1.

The engagement lock members 11 are provided at right and left positions on the lower portion of the seat cushion 4; namely, respective lower sides of corners of the front portion of the seat cushion 4. When the seat cushion 4 is in the forwardly-tipped position, the lock strikers 7 are arranged at positions immediately below the respective engagement lock members 11.

As shown in Fig. 4, each of the lock strikers 7 includes a lock 8 and a mount 9, and the mount 9 is secured to the floor 22 of the vehicle 1 with a bolt 10. The lock 8 is made of a round metal bar. An axis line of the lock 8 is bent into the shape of the letter U such that the lock stands upwards from the mount 9 in the vehicle, and both ends of the lock are fastened to the mount 9.

As shown in Figs. 4 and 6A, each of the engagement lock members 11 includes a base 12; a hook 13 that is supported on the base 12 to be rotatable around a shaft 15 (see Fig. 6A) in a right-left direction; and an accommodation housing 16 capable of accommodating the lock 8 of the lock striker 7.

As shown in Fig. 6A, the base 12 and the hook 13 of the engagement lock member 11 and the lock 8 of the lock striker 7 are arranged so as to engage with each other in the locked state.

Specifically, the hook 13 is urged in a clockwise direction of a sheet of Fig. 6A with a spring (not shown). In the locked state, a tab 13a of the hook 13 intrudes into the inside of the lock 8 and is held by the urging force of the spring such that clearance S defined between a tip end of the tab 13a and the base 12 becomes smaller than the dimension of an upper portion of the lock 8. Accordingly, the seat cushion 4 is held to be the forwardly-tipped position in the locked state of the lock mechanism 6.

As shown in Figs. 6A and 6B, the hook 13 includes an attachment hole 14 to which a flexible string-shaped member 17 is attached. An end of the string-shaped member 17 is drawn through the attachment hole 14, folded back, and sewed on string-shaped member, whereupon the string-shaped member 17 and the hook 13 are connected together.

As shown in Figs. 3 through 5, the string-shaped member 17 is connected between the hooks 13 of the right and left engagement lock members 11. In other words, the string-shaped member 17 links the right and left engagement lock members 11. The handgrip 18 that can be gripped by a passenger is provided on the string-shaped member 17 at a substantially center position in a longitudinal direction so as to cross the string-shaped member 17.

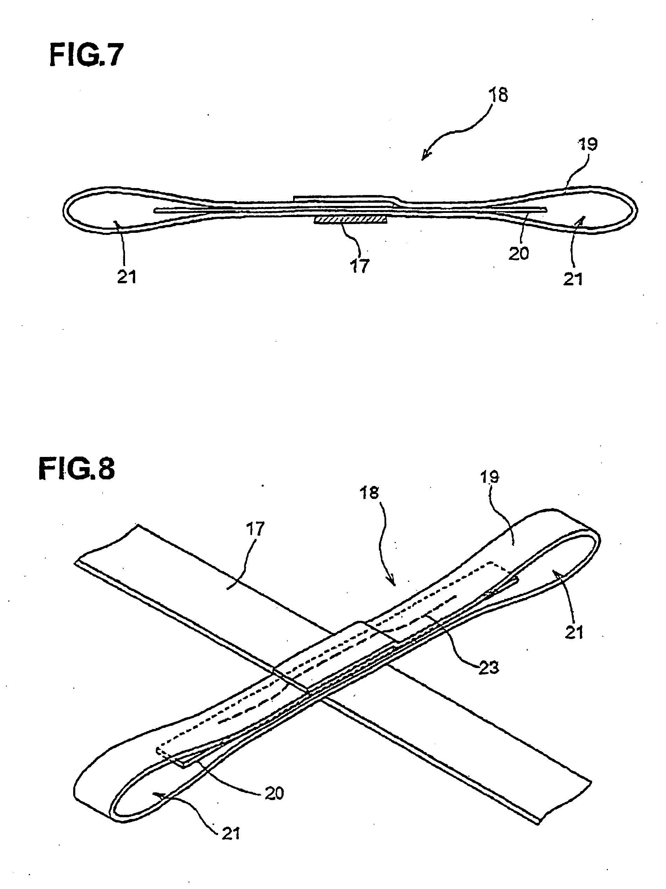

Fig. 7 shows the handgrip 18 provided on the string-shaped member 17 as a longitudinal cross-sectional view, and Fig. 8 shows the same as a perspective view.

As shown in Fig. 7, the handgrip 18 is made by overlaying both ends of one string 19 to thus form a loop, and placing a plate-like reinforcement member 20 (e.g., soft plastic, and the like), the width of which is smaller than the width of the string 19 in the loop.

As shown in Fig. 8, an overlap between both ends of the string 19 and the reinforcement member 20 is positioned on the string-shaped member 17, thereby forming two rings 21 having substantially same size such that one loop is formed at a front side and the other loop is formed at a rear side with the string-shaped member 17 interposed therebetween. The string 19, the reinforcement member 20, and the string-shaped member 17 are sewed together with a sewing thread 23. The handgrip 18 is thereby secured on the string-shaped member 17, and the reinforcement member 20 is arranged to cross the string-shaped member 17.

(Unlocking operation of the lock mechanism 6)

As shown in Figs. 3 and 6A, when the lock mechanism 6 is in the locked state, the hook 13 and the base 12 of the engagement lock member 11 are engaged with the lock 8 of the lock striker 7, whereby rotation of the seat cushion 4 is regulated, and the seat cushion 4 is held in the forwardly-tipped position. At this time, the lock 8 of the lock striker 7 is accommodated in the housing 16 through an opening 16a of the housing 16 of the engagement lock member 11(see Fig. 6A).

In order to release the lock mechanism 6 from the locked state, the handgrip 18 is pulled forwardly as shown in Fig. 4, whereby even tensile force can be imparted to the hooks 13 of the right and left engagement lock members 11 through the string-shaped members 17.

As shown in Fig. 6B, the hook 13 turns on the shaft 15 in the counterclockwise direction of the sheet of Fig. 6B to a position where a latching portion 13b of the hook 13 comes into contact with a counterpart latching portion 12a of the base 12. At this time, the clearance S defined between the tip end of the tab 13a of the hook 13 and the base 12 becomes larger than the dimension of the upper portion of the lock 8, whereby the base 12 and the hook 13 are disengaged from the lock 8. Thus, the engagement lock member 11 comes to be separatable from the lock striker 7.

Consequently, as shown in Fig. 5, the front portion of the seat cushion 4 is removed and jumped from the floor 22 of the vehicle 1, and the seat cushion 4 can be turned back toward the seat back 5, to thus come into the upright position. The space occupied by the seat cushion 4 in the forwardly-tipped can be utilized as a walk-in space for a passenger, a space for accommodating a luggage, and the like.

Therefore, according to the embodiment of the present invention, even tensile force can be imparted to the hooks 13 of the right and left engagement lock members 11 by means of a passenger pulling the handgrip 18. As a consequence, even unlocking action can be performed at both right and left positions. Further, as a result of adoption of the flexible string-shaped member 17, the lock mechanism can be reduced in weight as compared with a related-art unlocking lever, so that operability can also be improved.

As shown in Figs. 1 and 3 through 5, the handgrip 18 is provided to cross the string-shaped member 17. Hence, even when the string-shaped member 17 is twisted, either end of the handgrip 18 is arranged so as to be able to protrude from the lower portion of the seat cushion 4.

Further, as shown in Figs. 7 and 8, the handgrip 18 has the reinforcement member 20 which crosses the string-shaped member 17. Hence, the handgrip 18 is configured to be resistant to a bend by virtue of action of the reinforcement member 20. Accordingly, hiding of the grip 18 below the seat cushion 4, which would otherwise be caused when the grip 18 is folded backwards across the string-shaped member 17, can also be prevented. That is, the handgrip 18 is arranged to hardly become hidden below the seat cushion 4; hence, it is easy for a passenger to grip the handgrip, and ease of unlocking operation can be improved further.

According to the embodiment of the present invention, it is easy to evenly release the right and left engagement lock members 11 of the seat cushion 4 from the locked state, and ease of unlocking operation is significantly improved. As shown in Figs. 2A and 2B, it is also possible for the passenger to readily shift the seat cushion 4 of the rear seat 3 to the upright position while seated in the front seat 2.

Although not shown in the drawings, a method for returning the seat cushion 4 to the fowardly-tipped position, to thus lock the lock mechanism 6 will be described below in connection with the present embodiment.

First, the seat cushion 4 in the upright position is forwardly turned, thereby pressing the tab 13a of the hook 13 of the engagement lock member 11 against the upper portion of the lock 8 of the lock striker 7.

A slope (not shown) is provided on the tab 13a of the hook 13. When the tab 13a of the hook 13 is pressed against the upper edge of the lock 8, whereupon the slope contacts the upper portion of the lock 8. As a result of further application of pressing force, the slope of the tab 13a is configured such that the hook 13 turns in a counterclockwise direction of the sheet of Figs. 6A and 6B around the shaft 15 in defiance of the pressing force while the slope of the tab 13a is slidably contact with the upper portion of the lock 8 (see Fig. 6B).

When the hook turns to the position where the clearance S defined between the tip end of the tab 13a of the hook 13 and the base 12 becomes slightly larger than the dimension of the lock 8 of the lock striker 7, the lock 8 intrudes into the opening 16a of the housing 16, to thus be accommodated in the housing 16. Then, the tab 13a of the hook 13 enters the inside of the lock 8 of the lock striker 7 by means of urging force of the spring, so that the hook 13 and the base 12 of the engagement lock member 11 engage with the lock 8 of the lock striker 7, to thus come into the locked state.

[Another embodiment]

The structure of the engagement lock member 11 and the structure of the lock striker 7 of the embodiment may also be interchanged with each other. Specifically, the engagement lock members 11 may be provided on the floor 22 of the vehicle 1, and the lock strikers 7 may be provided on the seat cushion 4.

In the above-described embodiment, the flexible string-shaped member 17 is employed to link the engagement lock members 11 provided at right and left positions, respectively. However, the present invention is not limited thereto. Any member can be used to link the engagement lock members as long as the member has flexibility. For example, a wire may be used.

## Claims

1. A vehicle seat structure comprising engagement lock members (11) which are provided on one of a floor (22) and a lower portion of a seat cushion (4) at right and left positions thereof and which are respectively engageable to lock strikers (7) provided on the other of the floor (22) and the lower portion of the seat cushion (4) at right and left positions,
wherein the engagement lock members (11) are disengaged from the lock strikers (7) by unlocking operation to the engagement lock members (11) so that the seat cushion (4) becomes removable from the floor (22), **characterized in that**
a flexible member (17) links the engagement lock members (11),
wherein the unlocking operation, to the engagement lock members (11) is performed through the flexible member (17).

2. The vehicle seat structure according to claim 1,
wherein the flexible member (17) has a string shape.

3. The vehicle seat structure according to claim 1 or 2,
wherein a handgrip (18) is provided to cross the flexible member (17) at a substantially center position of the flexible member (17) in a longitudinal direction thereof, and
wherein the unlocking operation is performed by pulling the handgrip.

4. The vehicle seat structure according to claim 3,
wherein the handgrip (18) comprises a reinforcement member (20) which crosses the flexible member (17).

5. The vehicle seat structure according to claim 4,
wherein the flexible member (17), a string (19) of the handgrip (18) and the reinforcement member (20) are sewed together.

6. The vehicle seat structure according to claim 4 or 5,
wherein the reinforcement member is made of soft plastic.

7. The vehicle seat structure according to any one of claims 1 to 6,
wherein the engagement lock members (11) are provided on the lower portion of the seat cushion (4) at right and left corners thereof, respectively, in a front side,

8. The vehicle seat structure according to any one of claims 1 to 7,
wherein each of the lock strikers (7) comprises a lock (8) and a mount (9) secured to the floor (22) with a bolt (10).

9. The vehicle seat structure according to claim 8,
wherein each of the engagement lock members comprises a hook (13) configured to engage with the lock (8) of the corresponding lock striker (7), and
wherein the hook (13) comprises a slope to slidably contact the lock (8).

10. The vehicle seat structure according to claim 8 or 9,
wherein the lock (8) is made of a round metal bar and stands upwards from the mount (9).

11. The vehicle seat structure according to any one of claims 8 to 10,
wherein an axis line of the lock (8) is bent into a shape of the letter U.

## Patentansprüche

1. Fahrzeugsitzstruktur mit Eingriffsverriegelungsteilen (11), die entweder an einem Boden (22) oder einem unteren Teil eines Sitzpolsters (4) an rechten und linken Positionen desselben vorgesehen sind und die jeweils mit Verriegelungsbolzen (7) in Eingriff bringbar sind, die an dem anderen aus dem Boden (22) und dem unteren Teil des Sitzpolsters (4) an rechten und linken Positionen vorgesehen sind,
wobei die Eingriffsverriegelungsteile (11) durch einen Entriegelungsvorgang für die Eingriffsverriegelungsteile (11) außer Eingriff mit den Verriegelungsbolzen (7) gebracht werden, so dass das Sitzpolster (4) vom Boden (22) abnehmbar wird, **dadurch gekennzeichnet, dass**
ein flexibles Teil (17) die Eingriffsverriegelungsteile (11) verbindet,
wobei der Entriegelungsvorgang für die Eingriffsverriegelungsteile (11) über das flexible Teil (17) durchgeführt wird.

2. Fahrzeugsitzstruktur nach Anspruch 1,
wobei das flexible Teil (17) eine Schnurform aufweist.

3. Fahrzeugsitzstruktur nach Anspruch 1 oder 2,
wobei ein Handgriff (18) vorgesehen ist, um das flexible Teil an einer im Wesentlichen mittigen Position des flexiblen Teils (17) in einer Längsrichtung desselben zu queren, und
wobei der Entriegelungsvorgang durch Ziehen des Handgriffs durchgeführt wird.

4. Fahrzeugsitzstruktur nach Anspruch 3,
wobei der Handgriff (18) ein Verstärkungsteil (20) umfasst, das das flexible Teil (17) quert.

5. Fahrzeugsitzstruktur nach Anspruch 4,
wobei das flexible Teil (17), eine Schnur (19) des Handgriffs (18) und das Verstärkungsteil (20) zusammengenäht sind.

6. Fahrzeugsitzstruktur nach Anspruch 4 oder 5,
wobei das Verstärkungsteil aus Weichplastik hergestellt ist.

7. Fahrzeugsitzstruktur nach einem der Ansprüche 1 bis 6,
wobei die Eingriffsverriegelungsteile (11) an dem unteren Abschnitt des Sitzpolsters (4) jeweils an rechten und linken Ecken an einer Vorderseite vorgesehen sind.

8. Fahrzeugsitzstruktur nach einem der Ansprüche 1 bis 7,
wobei jeder der Verriegelungsbolzen (7) einen Schließbügel (8) und ein mit einer Schraube (10) am Boden (22) befestigtes Lager (9) aufweist.

9. Fahrzeugsitzstruktur nach Anspruch 8,
wobei jedes der Eingriffsverriegelungsteile einen Haken (13) umfasst, der dazu aufgebaut ist, in den Schließbügel (8) des zugehörigen Verriegelungsbolzens (7) einzugreifen, und
wobei der Haken (13) eine Schräge aufweist, um gleitfähig den Schließbügel (8) zu berühren.

10. Fahrzeugsitzstruktur nach Anspruch 8 oder 9,
wobei der Schließbügel (8) aus einer runden Metallstange gefertigt ist und von dem Lager (9) nach oben weg steht.

11. Fahrzeugsitzstruktur nach einem der Ansprüche 8 bis 10,
wobei eine Achslinie des Schließbügels (8) in einer U-Form gebogen ist.

## Revendications

1. Structure de siège de véhicule comprenant des organes de verrouillage de mise en prise (11) qui sont agencés sur l'un d'un plancher (22) et d'une portion inférieure d'un coussin de siège (4) à des positions gauche et droite de ce dernier et qui peuvent respectivement être mis en prise dans des percuteurs de verrouillage (7) situés sur l'autre du plancher (22) et de la portion inférieure du coussin de siège (4) à des positions droite et gauche,
dans laquelle les organes de verrouillage de mise en prise (11) sont hors de prise des percuteurs de verrouillage (7) par une opération de déverrouillage des organes de verrouillage de mise en prise (11) de sorte que le coussin de siège (4) devient amovible depuis le plancher (22), **caractérisée en ce que**
un organe flexible (17) relie les organes de verrouillage de mise en prise (11),
dans laquelle l'opération de déverrouillage des organes de verrouillage de mise en prise (11) est réalisée via l'organe flexible (17).

2. Structure de siège de véhicule selon la revendication 1,
dans laquelle l'organe flexible (17) a une forme de lanière.

3. Structure de siège de véhicule selon la revendication 1 ou 2,
dans laquelle une poignée (18) est agencée pour croiser l'organe flexible (17) au niveau d'une position sensiblement centrale de l'organe flexible (17) dans une direction longitudinale de ce dernier, et
dans laquelle l'opération de déverrouillage est réalisée en tirant sur la poignée.

4. Structure de siège de véhicule selon la revendication 3,
dans laquelle la poignée (18) comprend un organe de renforcement (20) qui croise l'organe flexible (17).

5. Structure de siège de véhicule selon la revendication 4,
dans laquelle l'organe flexible (17), une lanière (19) de la poignée (18) et l'organe de renforcement (20) sont cousus ensemble.

6. Structure de siège de véhicule selon la revendication 4 ou 5,
dans laquelle l'organe de renforcement est constitué de plastique souple.

7. Structure de siège de véhicule selon l'une quelconque des revendications 1 à 6,
dans laquelle les organes de verrouillage de mise en prise (11) sont agencés sur la portion inférieure du coussin de siège (4) au niveau de coins droit et gauche de ce dernier, respectivement, d'un côté avant.

8. Structure de siège de véhicule selon l'une quelconque des revendications 1 à 7,
dans laquelle chacun des percuteurs de verrouillage (7) comprend un verrou (8) et une monture (9) fixée au plancher (22) par un boulon (10).

9. Structure de siège de véhicule selon la revendication 8,
dans laquelle chacun des organes de verrouillage de mise en prise comprend un crochet (13) configuré pour se mettre en prise avec le verrou (8) du percuteur de verrou (7) correspondant, et
dans laquelle le crochet (13) comprend une pente avec d'entrer en contact de façon coulissante avec le verrou (8).

10. Structure de siège de véhicule selon la revendication 8 ou 9,
dans laquelle le verrou (8) est constitué d'une barre de métal ronde et se tient à la verticale depuis la monture (9).

11. Structure de siège de véhicule selon l'une quelconque des revendications 8 à 10,
dans laquelle une ligne d'axe du verrou (8) est courbée en forme de lettre U.
